# EUROPEAN PATENT APPLICATION

(11) **EP 4 734 044 A1**
(43) Date of publication of application: **29.04.2026**
(21) Application number: 24831783.6
(22) Date of filing: 19.06.2024
(51) Int. Cl.: G06T 3/4053, G06T 13/20, G06T 15/00

(54) **IMAGE PROCESSING SYSTEM, IMAGE PROCESSING METHOD, AND PROGRAM**

(30) Priority: 26.06.2023 JP 2023104102
(71) Applicant: Sony Interactive Entertainment Inc., Tokyo 108-0075 (JP); Sony Group Corporation, Tokyo 108-0075 (JP)
(72) Inventor: IHARA, Toshinori, Tokyo 108-0075 (JP); ASAYAMA, Hirotaka, Tokyo 108-0075 (JP); KOBIKI, Hisashi, Tokyo 108-0075 (JP); ITO, Ryota, Tokyo 108-0075 (JP); HOSOKAWA, Kenichiro, Tokyo 108-0075 (JP); IKENOUE, Shoichi, Tokyo 108-0075 (JP); MORIFUJI, Takafumi, Tokyo 108-0075 (JP); SASO, Kaoru, Tokyo 108-0075 (JP); KAWAI, Takuro, Tokyo 108-0075 (JP)
(74) Representative: Fish & Richardson P.C.
(86) International application number: PCT/JP2024/022177
(87) International publication number: WO 2025/004921

(57) **Abstract**

The estimation frame acquisition unit (314) inputs each intermediate frame (22) to a machine learning model (200), and acquires each of 1^{st} to N^{th} estimation frames (24) having an estimated pixel number equal to or greater than an intermediate pixel number which is greater than an input pixel number. The machine learning model (200) includes a cumulative feature information output layer (202) to which the n^{th} intermediate frame (22_n) (n= 2, 3, ..., N) and the (n-1)^{th} auxiliary information (28_n-1) based on (n-1)^{th} cumulative feature information (26_n-1) indicating the features of the 1^{st} to (n-1)^{th} intermediate frames (22) are inputted, where the cumulative feature information output layer (202) outputs the n^{th} cumulative feature information (26_n) indicating the features of the 1^{st} to n^{th} intermediate frames (22). The machine learning model (200) further includes an estimation frame output layer (204) to which the n^{th} cumulative feature information (26_n) is inputted, where the estimation frame output layer (204) outputs the n^{th} estimation frame (24_n). The machine learning model (200) has learnt by a plurality of training data which respectively includes a learning intermediate frame having the intermediate pixel number generated based on a learning input frame having the input pixel number, and a learning estimation frame having the estimated pixel number.

## Description

### Technical Field

The present invention relates to an image processing system, image processing method, and program.

### Background Art

A technique of estimating a high-resolution single image based on a low-resolution single image (super-resolution), using a conventional machine learning model, has been conventionally known (see Non Patent Literature 1 below).

### Citation List

### Non Patent Literature

Non Patent Literature 1: Chao Dong, Chen Change Loy, Kaiming He, Xiaoou Tang. Learning a Deep Convolutional Network for Image Super Resolution, in Proceedings of European Conference on Computer Vision (ECCV), 2014

### Summary of Invention

### Technical Problem

The present inventors have investigated applying the aforementioned super-resolution to a moving image such as a game screen. Here, in a super-resolution of a moving image, it is regarded that a higher image quality moving image can be estimated not only by the information of each frame which serves as a processing target, but also by taking into consideration the information of past frames of this frame. However, because, in conventional super-resolution, a single image (still image) is intended as a target as mentioned above, even if this technique is applied as-is to a moving image, the information of past frames in the estimation of a high-image quality moving image has not been sufficiently taken into consideration.

The object of the present invention is to provide an image processing system, image processing method, and program which utilizes the information of the past frames to enable estimating the high-image quality moving image based on the low-image quality moving image.

### Solution to Problem

The image processing system according to the present invention includes at least one processor, where the at least one processor: acquires each of 1^{st} to N^{th} input frames (N is a natural number equal to or greater than 2) having a prescribed input pixel number; acquires, based on each of the input frames, each of the 1^{st} to N^{th} intermediate frames, by generating an intermediate frame which corresponds to this input frame and which has an intermediate pixel number equal to or greater than the input pixel number; and inputs each of the intermediate frames to a machine learning model, and acquires each of 1^{st} to N^{th} estimation frames having an estimated pixel number which is greater than the input pixel number and which is equal to or greater than the intermediate pixel number. The machine learning model includes: a cumulative feature information output layer to which the n^{th} intermediate frame (n= 2, 3, ..., N) and (n-1)^{th} auxiliary information based on (n-1)^{th} cumulative feature information indicating the features of the 1^{st} to (n-1)^{th} intermediate frames are inputted, where the cumulative feature information output layer outputs the n^{th} cumulative feature information indicating the features of the 1^{st} to n^{th} intermediate frames; and an estimation frame output layer to which the n^{th} cumulative feature information is inputted, where the estimation frame output layer outputs the n^{th} estimation frame. The machine learning model has learnt by a plurality of training data which respectively includes a learning intermediate frame having the intermediate pixel number generated based on a learning input frame having the input pixel count, and a learning estimation frame having the estimated pixel number.

### Brief Description of Drawings

[Fig. 1] is a drawing illustrating an example of a hardware configuration of an image processing system.
[Fig. 2] is a drawing illustrating the overview of an image processing system.
[Fig. 3] is a drawing schematically illustrating the process of an image processing system.
[Fig. 4] is a function block diagram illustrating an example of functions realized by an image processing system.
[Fig. 5] is a drawing explaining the processing in a rendering unit.
[Fig. 6] is a drawing explaining the processing in an intermediate frame acquisition unit.
[Fig. 7] is a flowchart illustrating an example of the flow of the processing executed by an image processing system.

### Description of Embodiments

An example of an embodiment of the image processing system according to the present invention will be explained below with reference to the drawings.

### [1. Hardware configuration of an image processing system]

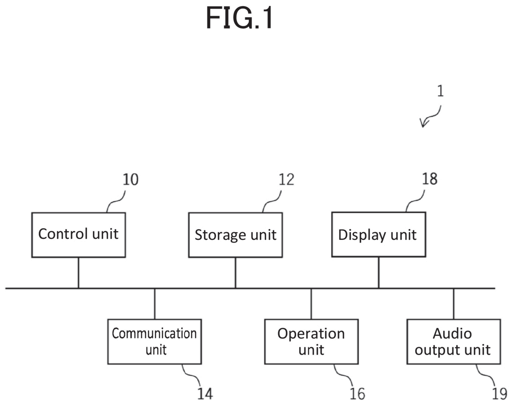

Fig. 1 is a drawing illustrating an example of a hardware configuration of an image processing system 1. The image processing system 1 is a computer of, for example, a game console (game machine), etc. As shown in Fig. 1, the image processing system 1 includes a control unit 10, a storage unit 12, a communication unit 14, an operation unit 16, a display unit 18 and an audio output unit 19.

The control unit 10 includes, e.g. a program control device such as a CPU operating in accordance with a program installed in the image processing system 1. Moreover, the control unit 10 also includes a GPU (Graphics Processing Unit) depicting an image in a frame buffer based on graphics commands and data supplied from the CPU.

The storage unit 12 includes, e.g. a main storage device such as a ROM or a RAM etc., and an auxiliary storage device such as an HDD or an SSD, etc. Programs and the like executed by the control unit 10 are stored in the storage unit 12. The storage unit 12 stores, in addition to a program for realizing all functions of the image processing system 1 mentioned below, a game program (game software) for example. Moreover, a frame buffer area, of which an image is depicted by GPU, is ensured in the storage unit 12.

The communication unit 14 is a communication interface such as an Ethernet (registered trademark) module or a wireless LAN module, etc.

The operation unit 16 is a user interface such as a keyboard or a mouse, a controller for a game console, etc., which receives an operation input of a user, and outputs a signal indicating the content thereof to the control unit 10.

The display unit 18 is a display device such as a liquid crystal display, an organic EL display, etc., which displays various kinds of images in accordance with an instruction of the control unit 10.

The audio output unit 19 is, for example, a speaker, which outputs audio indicated by audio data generated by the image processing system 1.

Besides the devices mentioned above, the image processing system 1 may also include an optical disk drive which reads an optical disk such as a DVD-ROM or a Blu-ray (registered trademark) disk, etc. or a USB (Universal Serial Bus) port, etc.

### [2. Overview of the image processing system]

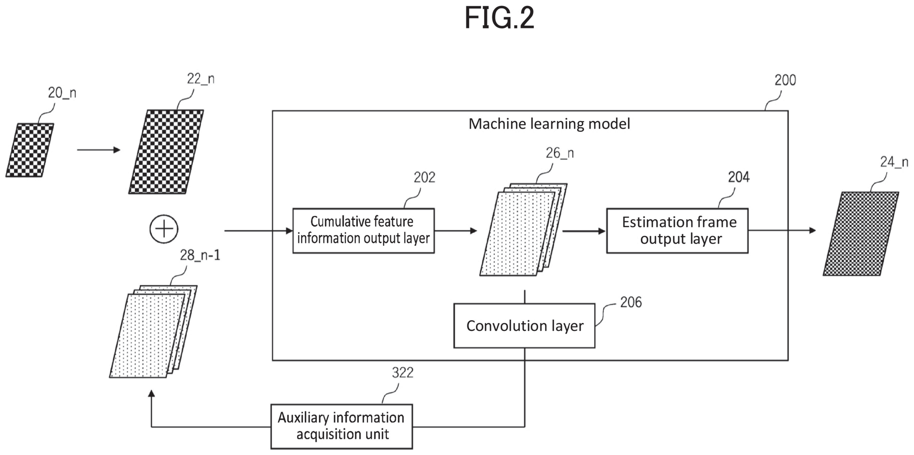

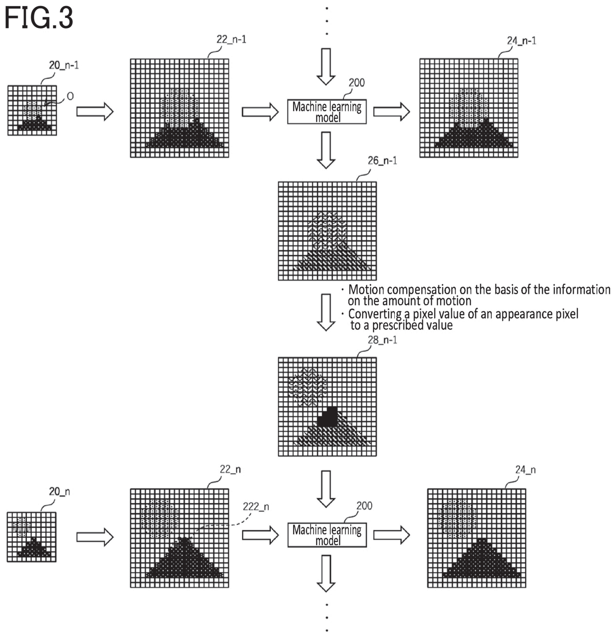

Fig. 2 is a drawing illustrating the overview of the image processing system 1. Fig. 3 is a drawing schematically illustrating the processing of the image processing system 1. The present embodiment exemplifies a case where the image processing system 1 is utilized to improve the image quality of a play moving image in a game. The play moving image is a moving image generated depending on a game program executed by the control unit 10 or an input by a user received by the operation unit 16, and is configured from a plurality of still images (frames) which are time series data. The processing which takes place in the image processing system 1 is mainly as follows.

### (1) Generation of input frames

Firstly, the image processing system 1 generates an image (input frame) where the game objects are depicted, by rendering three-dimensional data indicating one or more of these game objects as seen from a prescribed viewpoint. This input frame is an image having a prescribed pixel number (input pixel number) (see Fig. 3). The input frame is generated in every prescribed time. The pixel number of the input frame is, for example, 1920 x 1080 (1080p). Each generated input frame is not displayed as-is on the display unit 18, but is once accommodated in the storage unit 12, and subsequent processing is applied to the generated input frame. In the following explanation, processing with an n^{th} input frame 20_n as a target is mainly exemplified. Meanwhile, the same processing is also executed on other input frames (namely, n = 2, 3, ..., N).

### (2) Acquisition of intermediate frames

The image processing system 1, based on the acquired input frame 20_n, acquires a frame (intermediate frame) 22_n having a pixel number greater than an input pixel number (intermediate pixel count). The intermediate pixel number is, for example, 3840 x 2160 (4K). Specifically, the intermediate frame 22_n is generated by executing enlargement and interpolation processing on the input frame 20_n (see Fig. 3).

Here, although the intermediate frame 22_n has the pixel number greater than the pixel number of the input frame 20_n, it should be noted that the image quality thereof has not necessarily been sufficiently improved. Namely, the image quality of a frame does not mean a mere large pixel number (high degree of image quality). The image quality of the frame may be evaluated based on, for example, each of or a comprehensive consideration of a high SN ratio, high reproducibility of a space frequency, high time stability (few artefacts or flickering when a plurality of frames is continuously displayed), etc. when compared with a frame serving as a standard.

### (3) Acquisition of estimation frames

The image processing system 1 inputs the intermediate frame 22_n to a machine learning model 200, and acquires an estimation frame 24_n. The estimation frame 24_n is an image having the same pixel number as the intermediate pixel number (estimated pixel number), and the image quality (estimated image quality) equal to or greater than the input image quality (see Fig. 3).

Here, in addition to the intermediate frame 22_n, the (n-1)^{th} auxiliary information 28_n-1 is inputted to the machine learning model 200 (see Figs. 2 and 3). The auxiliary information 28_n-1 is information based on an (n-1)^{th} cumulative feature information 26_n-1 indicating the features of the 1^{st} to the (n-1)^{th} intermediate frames 22. Details of the cumulative feature information 26 and the auxiliary information 28 are described below.

The machine learning model 200 is a model which has learnt by a plurality of training data, which respectively includes a learning intermediate frame having the intermediate pixel number generated based on the learning input frame having the input pixel number and the input image quality, and the learning estimation frame having the estimated pixel number and the estimated image quality. Details of the machine learning model 200 are mentioned below.

### (4) Acquisition of cumulative feature information

The machine learning model 200 has the intermediate frame 22_n and the auxiliary information 28_n-1 inputted thereto, and has a cumulative feature information output layer 202 which outputs the n^{th} cumulative feature information 26_n indicating the features of the 1^{st} to n^{th} intermediate frames 22 (see Fig. 2). The image processing system 1 acquires the n^{th} cumulative feature information 26_n.

The acquired n^{th} cumulative feature information 26_n is inputted to an estimation frame output layer 204, and the n^{th} estimation frame 24_n is outputted from the estimation frame output layer 204 (see Fig. 2).

The acquired n^{th} cumulative feature information 26_n is also stored in the storage unit 12 and is provided to the estimation of the estimation frame 24_n+1 which corresponds to the next input frame ((n+1)^{th} input frame) 20_n+1.

### (5) Acquisition of auxiliary information

As mentioned above, the (n-1)^{th} cumulative feature information 26_n-1 is information indicating the features of the 1^{st} to (n-1)^{th} intermediate frames 22 (and the 1^{st} to (n-1)^{th} input frames 20 in the long run). If the cumulative feature information 26_n-1 indicating the accumulation of the information of a past input frame 20 is utilized for the estimation of the n^{th} estimation frame 24_n, the information that can be used for the estimation increases and hence the high-image quality estimation frame 24_n can be obtained.

However, in case, for example, the displayed game objects move between the (n-1)^{th} input frame 20_n-1 and the n^{th} input frame 20_n, when the n^{th} intermediate frame 22_n and the cumulative feature information 26_n-1 are inputted as-is to the machine learning model 200, a phenomenon could occur in which a residual image of a game object which have been displayed in the (n-1)^{th} input frame 20_n-1 ends up being displayed (so-called ghost phenomenon).

Thus, the image processing system 1 acquires the (n-1)^{th} auxiliary information 28_n-1 by applying various corrections mentioned below, based on information (motion vector, depth buffer, etc.) obtainable at the time of rendering to the cumulative feature information 26_n-1 (see Figs. 2 and 3). As mentioned above, the acquired (n-1)^{th} auxiliary information 28_n-1, together with the n^{th} intermediate frame 22_n, are inputted to the machine learning model 200, and the estimation of the n^{th} estimation frame 24_n is applied to the information 28_n-1.

As explained above, the image processing system 1 according to the present embodiment uses, in addition to the intermediate frame 22 which corresponds to the present input frame 20, the auxiliary information 28 indicating accumulation of past information and estimates the estimation frame 24. Thereby, the information that can be used for the estimation increases and hence the high-image quality estimation frame 24_n can be obtained. Details of the image processing system 1 will be explained below.

### [3. Functions realized by the image processing system]

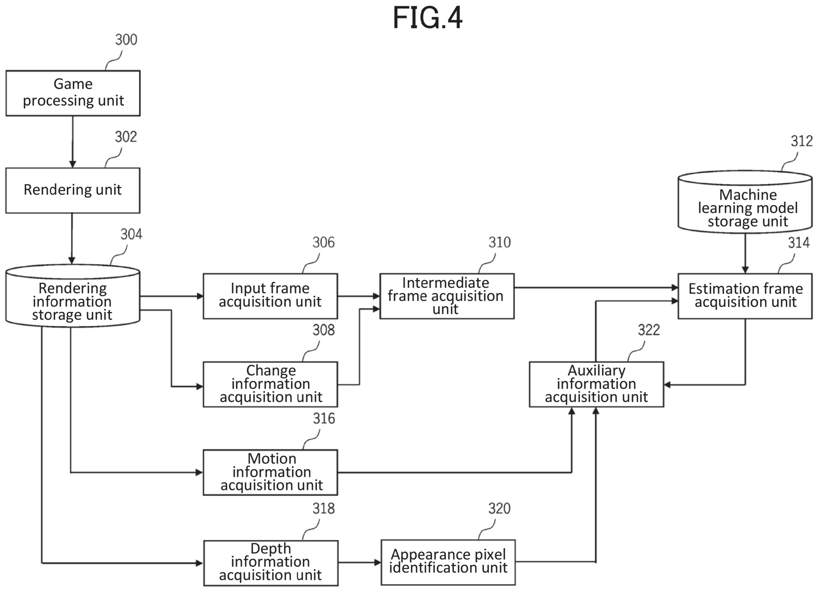

Fig. 4 is a function block diagram illustrating an example of functions realized by the image processing system 1. As shown in Fig. 4, in the image processing system 1, a game processing unit 300, a rendering unit 302, a rendering information storage unit 304, an input frame acquisition unit 306, a change information acquisition unit 308,
an intermediate frame acquisition unit 310, a machine learning model storage unit 312, an estimation frame acquisition unit 314,
a motion information acquisition unit 316, a depth information acquisition unit 318, an appearance pixel identification unit 320 and an auxiliary information acquisition unit 322 are realized. The game processing unit 300, the rendering unit 302, the input frame acquisition unit 306, the change information acquisition unit 308, the intermediate frame acquisition unit 310, the estimation frame acquisition unit 314, the motion information acquisition unit 316, the depth information acquisition unit 318, the appearance pixel identification unit 320 and the auxiliary information acquisition unit 322 are realized mainly by the control unit 10. The rendering information storage unit 304 and the machine learning model storage unit 312 are realized mainly by the storage unit 12. The game processing unit 300, the rendering unit 302 and the rendering information storage unit 304 have functions provided by a game software.

### [Game processing unit]

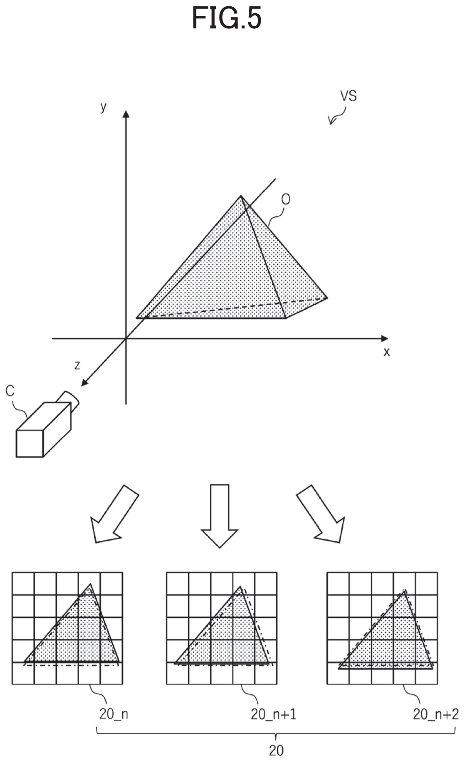

The game processing unit 300 executes various processes relating to a game. The game processing unit 300 executes, for example, the following processes: arranging a game object O in a virtual three-dimensional space VS, operating or moving the game object O, and changing a viewpoint C for viewing the virtual three-dimensional space VS, etc., depending on the game program executed by the control unit 10 or the input by a user received by the operation unit 16 (see Fig. 5). The game object O is configured by a primitive such as a polygon indicated by three-dimensional data. The three-dimensional data includes geometrical information indicating the position of a vertex, etc., phase information indicating how the vertexes are tied, and attribute information such as a colour, etc.

### [Rendering unit]

Fig. 5 is a drawing explaining the processing in the rendering unit 302. The rendering unit 302 generates the 1^{st} to N^{th} input frames 20 (N is a natural number equal to or greater than 2) by executing the rendering (depiction processing) of the three-dimensional data indicating the one or more game objects O as seen from the prescribed viewpoint C. The rendering unit 302 executes the rendering based on of the various processing results executed by the game processing unit 300. Specifically, the rendering unit 302 executes vertex processing (vertex shading) and pixel processing (pixel shading), based on the three-dimensional data indicating the game object O arranged in the virtual three-dimensional space VS. The vertex processing includes coordinate conversion processing (perspective projection) from a view coordinate system to a screen coordinate system, and a numerical value relating to a change of the viewpoint C is added to a perspective projection matrix (camera matrix) which is used for the coordinate conversion processing, as mentioned below. The rendering unit 302 may also execute the rendering based on light source information or depth information (depth buffer), texture information, and normal line information, etc. Besides the aforementioned processing, the rendering unit 302 may also execute, for example, processing to apply effects such as depth of field (DoF) or motion blur, etc. Game software developers, etc. may appropriately set the processing in the rendering unit 302. Here, the game software developers, etc. may adjust texture MIP depending on the estimated pixel number of the estimation frame 24, etc. Thereby, occurrence of noises such as moiré can be suppressed in the estimation frame 24.

Here, the rendering unit 302 generates each input frame 20 by executing the rendering so that the viewpoint C changes for every input frame 20. Here, even if the game processing unit 300 already fixed the viewpoint C to a prescribed position, the rendering unit 302 changes to the viewpoint C for every input frame 20. As a result, as shown in Fig. 5, the position of the displayed game object O changes in each of the input frames 20_n, 20_n+1, and 20_n+2. In other words, the rendering unit 302 applies jitter at the time of generating each input frame 20. Specifically, the rendering unit 302 changes the viewpoint C for every input frame 20 by adding, to the perspective projection matrix, a numerical value corresponding to a size of less than one pixel, which differs for every input frame 20. The rendering unit 302 changes the viewpoint C for every input frame 20 in accordance with a prescribed rule. The Halton sequence, for example, can be used as such a rule.

### [Rendering information storage unit]

The rendering information storage unit 304 stores information required in the rendering process by the rendering unit 302, and information obtainable as a result of the rendering process. For example, the rendering information storage unit 304 stores the input frame 20. Moreover, the rendering information storage unit 304 stores the change information, motion information and depth information. Details of the change information, the motion information and the depth information are described below. In addition, the rendering information storage unit 304 may store parameters used for coordinate conversion, light source information, texture information, and normal line information, etc.

### [Input frame acquisition unit]

The input frame acquisition unit 306 acquires each of 1^{st} to N^{th} input frames 20. Specifically, the input frame acquisition unit 306 acquires each of the 1^{st} to N^{th} input frames 20 stored in the rendering information storage unit 304.

### [Change information acquisition unit]

The change information acquisition unit 308 acquires the change information. The change information acquisition unit 308 acquires the change information stored in the rendering information storage unit 304. The change information is information relating to the change of the viewpoint C for every input frame 20 in the rendering. Specifically, the change information is information indicating the amount of change of the viewpoint C before and after the change. The information indicating the amount of change can also be a change vector indicating the direction and the distance of change. For example, since the information indicating the amount of change of the viewpoint C is included in the aforementioned Halton sequence, such information may be used as the change information.

### [Intermediate frame acquisition unit]

The intermediate frame acquisition unit 310 acquires each of the 1^{st} to N^{th} intermediate frames 22 by generating the intermediate frame 22 which corresponds to the input frame 20 and which has the intermediate pixel number equal to or greater than the input pixel number, based on each input frame 20. In the present embodiment, each intermediate frame 22 has the intermediate pixel number greater than the input pixel number. Namely, in the present embodiment, each intermediate frame 22 is an image obtained by enlarging the input frame 20 corresponding to this intermediate frame 22.

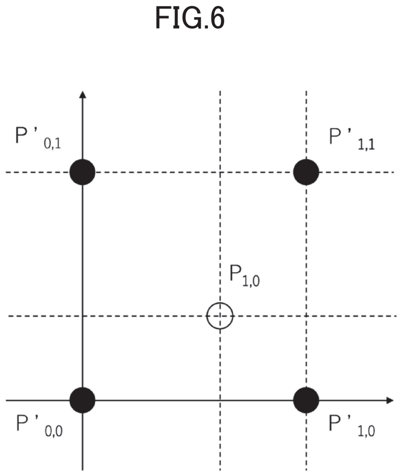

Specifically, the intermediate frame acquisition unit 310 obtains a pixel value of a position corresponding to each pixel before the change by interpolation in the input frame 20, based on the change information and each pixel of each input frame 20, thereby generating each intermediate frame 22. Fig. 6 is a drawing explaining the processing in the intermediate frame acquisition unit 310. Fig. 6 exemplifies a case of obtaining the n^{th} intermediate frame 22_n. For example, as shown in Fig. 6, if a pixel center of a pixel in the intermediate frame 22_n intended to be acquired is P_{1,0}, the intermediate frame acquisition unit 310 obtains a pixel value of P_{1,0} by bilinear interpolation, based on the coordinates and the pixel values of the pixel centers P'_{0,0}, P'_{1,0}, P'_{0,1}, P'_{1,1} of the four respective pixels closest to P_{1,0} in the input frame 20_n. Here, P'_{1,0} is at a position shifted from P_{1,0} by the amount of change indicated by the change information. A pixel value of a newly generated pixel is also similarly obtained by the enlargement processing. In addition to the bilinear interpolation, various publicly known methods such as bicubic interpolation and Lanczos interpolation, etc. can be used as the method of interpolation.

When the rendering is executed so that the viewpoint C changes for every input frame 20, while the amount of time series information increases, each of the thus obtained input frames 20 (hereinunder "changed input frame") is utilized for the estimation, so that a higher image quality estimation frame 24 can be obtained.

On the other hand, if the changed input frame (or an enlarged image thereof) is inputted as-is to the machine learning model 200, the estimation accuracy may end up being reduced due to the influence of the change of the aforementioned viewpoint C.

Thus, as described above, in the image processing system 1, the pixel value of the position corresponding to each pixel before the change is obtained by the interpolation in the input frame 20, based on the change information and each pixel of each input frame 20, and each intermediate frame 22 is generated to input it to the machine learning model 200. Thereby, the influence of the change of the viewpoint C is corrected, and hence the reduction of the estimation accuracy can be prevented.

### [Machine learning model]

The machine learning model 200 is a model which estimates the n^{th} estimation frame 24_n based on the n^{th} intermediate frame 22_n. Specifically, the machine learning model 200 is a model which estimates the n^{th} estimation frame 24_n based on the n^{th} intermediate frame 22_n and the (n-1)^{th} auxiliary information 28_n-1. Specifically, the machine learning model 200 is a convolutional neural network (CNN). Publicly known models such as multilayer structure ResNet having a residual connection mechanism and the so-called encoder-decoder type U-Net, etc. can be used as the machine learning model 200. The model described in Non Patent Literature 1 may also be used as the machine learning model 200.

The machine learning model 200 is the model which has learnt by the plurality of training data which respectively includes the learning intermediate frame having the intermediate pixel number generated based on the learning input frame having the input pixel number, and the learning estimation frame having the estimated pixel number. Various publicly known methods such as backpropagation, etc. can be used for the learning by the machine learning model 200.

Specifically, the machine learning model 200 includes the cumulative feature information output layer 202, the estimation frame output layer 204 and a convolution layer 206 (see Fig. 2).

The cumulative feature information output layer 202 has the n^{th} intermediate frame 22_n and the (n-1)^{th} auxiliary information 28_n-1 based on the (n-1)^{th} cumulative feature information 26_n-1 indicating the features of the 1^{st} to (n-1)^{th} intermediate frames 22 inputted thereto, and outputs the n^{th} cumulative feature information 26_n indicating the features of the 1^{st} to n^{th} intermediate frames 22_n. The cumulative feature information output layer 202 may be configured from, for example, one or more convolution layers. The cumulative feature information 26_n-1 is image information having the same pixel number as the intermediate pixel number (bitmap format information). The cumulative feature information 26_n-1 may also be a feature map indicating the features of the 1^{st} to (n-1)^{th} intermediate frames 22.

The cumulative feature information output layer 202 has the 1^{st} intermediate frame 22_1 and the given auxiliary information inputted thereto, and outputs the 1^{st} cumulative feature information 26_1. When n = 1, because the cumulative feature information 26 and auxiliary information 28 do not exist prior thereto, the given auxiliary information prepared beforehand, together with the 1^{st} intermediate frame 22_1, is inputted to the cumulative feature information output layer 202.

The estimation frame output layer 204 has the n^{th} cumulative feature information 26_n inputted thereto and outputs the n^{th} estimation frame 24_n. The estimation frame output layer 204 may be configured from, for example, one or more convolution layers like the cumulative feature information output layer 202. Alternatively, the estimation frame output layer 204 may also be configured from one or more transposed convolution layers (reverse convolution layers).

The convolution layer 206 is a layer which maintains the pixel number of the cumulative feature information 26, whilst reducing the channel number thereof. The cumulative feature information 26 outputted from the convolution layer 206 has the process with the auxiliary information acquisition unit 322 applied thereto. Since the dimensions of the cumulative feature information 26 are reduced according to the convolution layer 206, the calculation costs can be suppressed. The convolution layer 206 is, for example, a convolution layer with a kernel size of 1 x 1, but is not limited to this.

### [Machine learning model storage unit]

The machine learning model storage unit 312 stores the machine learning model 200. Specifically, the machine learning model storage unit 312 stores the parameters of the machine learning model 200 (the number of convolution layers, the number of notes used in each convolution layer, and the weight of each note, etc.).

### [Estimation frame acquisition unit]

The estimation frame acquisition unit 314 inputs each intermediate frame 22 to the machine learning model 200, and acquires each of the 1^{st} to N^{th} estimation frames 24 having the estimated pixel number equal to or greater than the intermediate pixel number which is greater than the input pixel number. In the present embodiment, the estimation frame 24 has the same estimated pixel number as the intermediate pixel number. More specifically, the estimation frame acquisition unit 314 inputs the n^{th} intermediate frame 22_n and the (n-1)^{th} auxiliary information 28_n-1 to the machine learning model 200, and acquires the n^{th} estimation frame 24_n.

### [Motion information acquisition unit]

The motion information acquisition unit 316 acquires the (n-1)^{th} motion information which is information indicating the amount and the direction of the motion from the (n-1)^{th} input frame 20_n-1 to the n^{th} input frame 20_n. Specifically, the (n-1)^{th} motion information is image information which has pixels with the same number as the intermediate pixel number, and which indicates the amount and the direction of the motion of each pixel between the (n-1)^{th} input frame 20_n-1 and the n^{th} input frame 20_n (bitmap format information). The motion information is also called motion vector. Specifically, the motion information acquisition unit 316 acquires the original motion information having the same pixel number as the input pixel number, and acquires the motion information having the pixels with the same number as the intermediate pixel number by executing the enlargement and the interpolation processing on the original motion information.

### [Depth information acquisition unit]

The depth information acquisition unit 318 acquires the (n-1)^{th} depth information indicating each pixel depth of the (n-1)^{th} input frame 20_n-1, and the n^{th} depth information indicating each pixel depth of the n^{th} input frame 20_n. Specifically, the depth information is image information having the pixels with the same number as the intermediate pixel number (bitmap format information). The depth information is also called depth buffer or Z buffer. Specifically, the depth information acquisition unit 318 acquires the original depth information having the same pixel number as the input pixel number, and acquires the depth information having the pixels with the same number as the intermediate pixel number by executing the enlargement and the interpolation processing on the original depth information.

### [Appearance pixel identification unit]

The appearance pixel identification unit 320 identifies, based on the (n-1)^{th} depth information and the n^{th} depth information, amongst the pixels of the n^{th} intermediate frame 22_n, an n^{th} appearance pixel 222_n as a fully or partially displayed pixel of the game object O which is not displayed in the (n-1)^{th} intermediate frame 22_n-1 (see Fig. 3). Specifically, the appearance pixel identification unit 320 identifies the n^{th} appearance pixel 222_n, based on the difference between the (n-1)^{th} depth information and the n^{th} depth information. The appearance pixel identification unit 320 may also specify the n^{th} appearance pixel 222_n, based on the (n-1)^{th} perspective projection matrix relating to the (n-1)^{th} intermediate frame 22_n-1 and the n^{th} perspective projection matrix relating to the n^{th} intermediate frame 22_n. Moreover, the appearance pixel identification unit 320 may also specify the n^{th} appearance pixel 222_n by utilizing the (n-1)^{th} motion information. More specifically, the appearance pixel identification unit 320 specifies the n^{th} appearance pixel 222_n, and generates an n^{th} appearance pixel information, which is image information indicating the position of the n^{th} appearance pixel 222_n.

### [Auxiliary information acquisition unit]

The auxiliary information acquisition unit 322 acquires the (n-1)^{th} auxiliary information 28_n-1 by applying motion compensation to the (n-1)^{th} cumulative feature information 26_n-1, based on the (n-1)^{th} motion information. The motion compensation is a processing to move the pixel at the position x of the (n-1)^{th} cumulative feature information 26_n to a position x', for example, in case a pixel at a position x at the (n-1)^{th} intermediate frame 22_n-1 already moved to the position x' at the n^{th} intermediate frame 22_n (see Fig. 3). Namely, the auxiliary information acquisition unit 322, based on the (n-1)^{th} motion information, acquires the (n-1)^{th} auxiliary information 28_n-1 by setting the each pixel value of the one or more pixels of the (n-1)^{th} cumulative feature information 26_n-1 to the pixel at a moved position in accordance with the amount and the direction of the motion of the pixel.

In case the game object O moves between the n^{th} input frame 20_n and the (n-1)^{th} input frame 20_n-1, at the time of acquiring the n^{th} estimation frame 24_n, if the n^{th} intermediate frame 22_n and the (n-1)^{th} cumulative feature information 26_n-1 are inputted as-is to the machine learning model 200, a ghost phenomenon could occur in the n^{th} estimation frame 24_n to be outputted, in which ghost phenomenon the residual image of the game object O, which was displayed in the n^{th} intermediate frame 22_n, ends up being displayed.

Thus, as described above, the image processing system 1 is configured so that, the (n-1)^{th} auxiliary information 28_n-1 is acquired by applying the motion compensation to the (n-1)^{th} cumulative feature information 26_n-1, based on the (n-1)^{th} motion information, and, at the time of acquiring the n^{th} estimation frame 24_n, the (n-1)^{th} auxiliary information 28_n-1 is inputted to the machine learning model 200. Thereby, the aforementioned ghost phenomenon can be suppressed.

Moreover, the auxiliary information acquisition unit 322 acquires the (n-1)^{th} auxiliary information 28_n-1 by converting the pixel value of the n^{th} appearance pixel 222_n in the (n-1)^{th} cumulative feature information 26_n-1 to a prescribed value. Specifically, the auxiliary information acquisition unit 322, based on the n^{th} appearance pixel information, acquires the (n-1)^{th} auxiliary information 28_n-1 by converting the pixel value of the n^{th} appearance pixel 222_n in the (n-1)^{th} cumulative feature information 26_n-1 to a prescribed value. The prescribed value may be, for example, a fixed value such as 0 (black), etc., and may also be the pixel value of the n^{th} appearance pixel 222_n in the n^{th} intermediate frame 22_n.

In the n^{th} input frame 20_n, in case the game object O, which is not displayed by the (n-1)^{th} input frame 20_n-1, is fully or partially displayed, at the time of acquiring the n^{th} estimation frame 24_n, if the n^{th} intermediate frame 22_n and the (n-1)^{th} cumulative feature information 26_n-1 are inputted as-is to the machine learning model 200, the aforementioned ghost phenomenon could occur in the n^{th} estimation frame 24_n to be outputted.

Thus, as described above, the image processing system 1 is configured so as to specify the n^{th} appearance pixel 222_n amongst the pixels of the n^{th} intermediate frame 22_n, where the n^{th} appearance pixel 222_n is the fully or partially displayed pixel of the game object O which is not displayed in the (n-1)^{th} intermediate frame 22_n-1, and so as to acquire the (n-1)^{th} auxiliary information 28_n-1 by converting the pixel value of the n^{th} appearance pixel 222_n in the (n-1)^{th} cumulative feature information 26_n-1 to a prescribed value. Thereby, the aforementioned ghost phenomenon can be suppressed.

### [4. Processing executed by the image processing system]

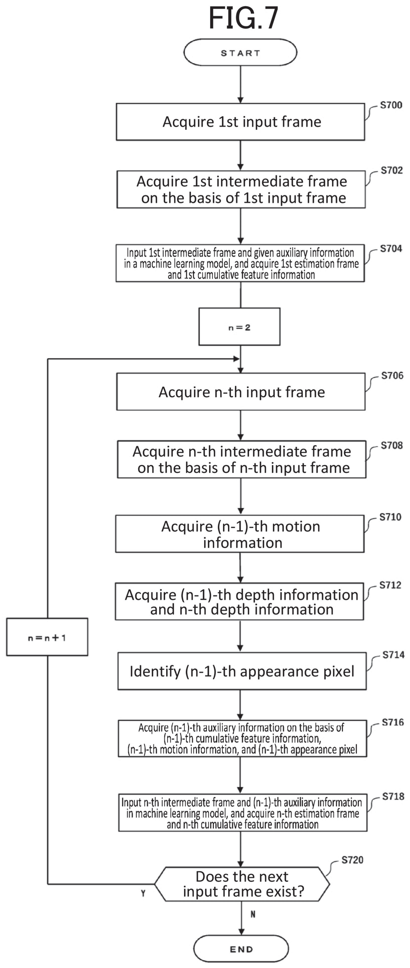

Fig. 7 is a flowchart illustrating an example of the flow of the processing executed by the image processing system 1. The processing shown in Fig. 7 is executed by the control unit 10 operating in accordance with the program stored in the storage unit 12.

### (1) Processing in n = 1

First, the control unit 10 acquires the 1^{st} input frame 20_1 (S700). The control unit 10, based on the 1^{st} input frame 20_1, acquires the 1^{st} intermediate frame (S702). Then, the control unit 10 inputs the 1^{st} intermediate frame and the given auxiliary information to the machine learning model 200, and acquires the 1^{st} estimation frame 24_1 and the 1^{st} cumulative feature information 26_1 (S704).

### (2) Processing in n ≥ 2

The control unit 10 acquires the n^{th} input frame 20_n (S706). The control unit 10, based on the n^{th} input frame 20_n, acquires the n^{th} intermediate frame 22_n (S708).

Next, the control unit 10 acquires the (n-1)^{th} motion information (S710). Moreover, the control unit 10 acquires the (n-1)^{th} depth information and the n^{th} depth information (S712), and, based on the (n-1)^{th} depth information and the n^{th} depth information, specifies the n^{th} appearance pixel 222_n (S714). The control unit 10 acquires the (n-1)^{th} auxiliary information 28_n-1 (S716) based on the (n-1)^{th} cumulative feature information 26_n-1, the (n-1)^{th} motion information, and the n^{th} appearance pixel 222_n. Then, the control unit 10 inputs the n^{th} intermediate frame 22_n and the (n-1)^{th} auxiliary information 28_n-1 to the machine learning model 200, and acquires the n^{th} estimation frame 24_n and the n^{th} cumulative feature information 26_n (S718). The control unit 10 determines whether or not the next frame exists (S720), and, if it was determined that the next frame does exist (S720; Y), the frame is incremented to n=n+1, and the process at S706 to S718 are repeated. If the control unit 10 has determined that the next frame does not exist (S720; N), this processing terminates. If the control unit 10 determines that the next frame does not exist (S720; N), the 1^{st} to N^{th} estimation frames 24 may be displayed as-is on the display unit 18.

### [5. Summary]

According to the image processing system 1 relating to the present embodiment as explained above, the (n-1)^{th} cumulative feature information 26_n-1 indicating the features of the 1^{st} to (n-1)^{th} intermediate frames 22 is used to estimate the n^{th} estimation frame 24_n. Namely, in addition to the information of the n^{th} input frame 20_n, since the information of the 1^{st} to (n-1)^{th} input frames 20 can be utilized for the estimation, the information that can be used for the estimation increases, and the high-definition estimation frame 24_n can be obtained.

The present invention is not limited to the aforementioned embodiment. Moreover, the aforementioned specific character strings or numerical values, and specific character strings or numerical values in the drawings are exemplifications, and on the present invention is not limited to these character strings or numerical values.

For example, in the present embodiment, the case where the intermediate pixel number is greater than the input pixel and the intermediate pixel number and the estimated pixel number have the same number is exemplified, while the intermediate pixel number and the input pixel number may also have the same number, and the estimated pixel number may also be greater than the intermediate pixel number. Namely, the intermediate frame 22 need not necessarily be the enlarged input frame 20.

### [6. Addenda]

(1) An image processing system including at least one processor, where
   the at least one processor:
   acquires each of 1^{st} to N^{th} input frames (N is a natural number equal to or greater than 2) having a prescribed input pixel number;
   acquires, based on each of the input frames, each of the 1^{st} to N^{th} intermediate frames by generating an intermediate frame which corresponds to this input frame and which has an intermediate pixel number equal to or greater than the input pixel number; and
   inputs each of the intermediate frames to a machine learning model, and acquires each of 1^{st} to N^{th} estimation frames having an estimated pixel number equal to or greater than the intermediate pixel number which is greater than the input pixel number; where
   the machine learning model includes:
      a cumulative feature information output layer to which the n^{th} intermediate frame (n= 2, 3, ..., N) and (n-1)^{th} auxiliary information based on (n-1)^{th} cumulative feature information indicating the features of the 1^{st} to (n-1)^{th} intermediate frames are inputted, where the cumulative feature information output layer outputs the n^{th} cumulative feature information indicating the features of the 1^{st} to n^{th} intermediate frames; and
      an estimation frame output layer to which the n^{th} cumulative feature information is inputted, where the estimation frame output layer outputs the n^{th} estimation frame; where
      the machine learning model has learnt by a plurality of training data which respectively includes
      a learning intermediate frame having the intermediate pixel number generated based on a learning input frame having the input pixel number, and
      a learning estimation frame having the estimated pixel number.
(2) An image processing system according to (1), where
   each of the input frames is an image obtainable by executing rendering of three-dimensional data indicating one or more objects as seen from a prescribed viewpoint.
(3) An image processing system according to (2), where
   each of the input frames is an image obtainable by executing the rendering so that the viewpoint changes for each of the input frames, and
   the at least one processor:
      acquires change information which is information relating to a change of the viewpoint for each of the input frames in the rendering; and
      obtains a pixel value of a position corresponding to each pixel before the change, by interpolation in the input frame, based on the change information and each pixel of each of the input frames, and generates each of the intermediate frames.
(4) An image processing system according to (2) or (3), where
   the at least one processor
   acquires the (n-1)^{th} motion information which is information indicating the amount and the direction of motion from the (n-1)^{th} input frame towards the n^{th} input frame, and
   acquires the (n-1)^{th} auxiliary information by applying motion compensation to the (n-1)^{th} cumulative feature information, based on the (n-1)^{th} motion information.
(5) An image processing system according to (4), where
   the at least one processor,
   depth information acquisition means which acquires the (n-1)^{th} depth information indicating each pixel depth of the (n-1)^{th} input frame, and n^{th} depth information indicating each pixel depth of the n^{th} input frame,
   specifies, amongst the n^{th} intermediate frame pixels, an n^{th} appearance pixel as a fully or partially displayed pixel of the object which is not displayed in the (n-1)^{th} intermediate frame, based on the (n-1)^{th} depth information and the n^{th} depth information, and
   acquires the (n-1)^{th} auxiliary information by converting a pixel value of the n^{th} appearance pixel in the (n-1)^{th} cumulative feature information to a prescribed value.
(6) An image processing system according to (1) to (5), where
   the 1^{st} intermediate frame and a given auxiliary information are inputted to the cumulative feature information output layer, which outputs the 1^{st} cumulative feature information.
(7) An image processing system according to (1) to (6), where
   the cumulative feature information is the image information having the same pixel number as an intermediate pixel number.

## Claims

1. An image processing system including at least one processor, wherein
the at least one processor:
acquires each of 1^{st} to N^{th} input frames (N is a natural number equal to or greater than 2) having a prescribed input pixel number;
acquires, based on each of the input frames, each of the 1^{st} to N^{th} intermediate frames by generating an intermediate frame which corresponds to the input frame and which has an intermediate pixel number equal to or greater than the input pixel number; and
inputs each of the intermediate frames to a machine learning model, and acquires each of 1^{st} to N^{th} estimation frames having an estimated pixel number equal to or greater than the intermediate pixel number which is greater than the input pixel number, wherein
the machine learning model includes:
a cumulative feature information output layer to which the n^{th} intermediate frame (n= 2, 3, ..., N) and (n-1)^{th} auxiliary information based on (n-1)^{th} cumulative feature information indicating the features of the 1^{st} to (n-1)^{th} intermediate frames are inputted, the cumulative feature information output layer outputting the n^{th} cumulative feature information indicating the features of the 1^{st} to n^{th} intermediate frames; and
an estimation frame output layer to which the n^{th} cumulative feature information is inputted, the estimation frame output layer outputting the n^{th} estimation frame, wherein
the machine learning model has learnt by a plurality of training data which respectively includes
a learning intermediate frame having the intermediate pixel number generated based on a learning input frame having the input pixel number, and
a learning estimation frame having the estimated pixel number.

2. The image processing system according to Claim 1, wherein
each of the input frames is an image obtainable by executing rendering of three-dimensional data indicating one or more objects as seen from a prescribed viewpoint.

3. The image processing system according to Claim 2, wherein
each of the input frames is an image obtainable by executing the rendering so that the viewpoint changes for each of the input frames, and
the at least one processor:
acquires change information which is information relating to a change of the viewpoint for each of the input frames in the rendering; and
obtains a pixel value of a position corresponding to each pixel before the change by interpolation in the input frame, based on the change information and each pixel of each of the input frames, and generates each of the intermediate frames.

4. The image processing system according to Claim 2 or 3, wherein
the at least one processor
acquires the (n-1)^{th} motion information which is information indicating the amount and the direction of motion from the (n-1)^{th} input frame towards the n^{th} input frame, and
acquires the (n-1)^{th} auxiliary information by applying motion compensation on the (n-1)^{th} cumulative feature information, based on the (n-1)^{th} motion information.

5. The image processing system according to Claim 4, wherein
the at least one processor,
further includes depth information acquisition means which acquires (n-1)^{th} depth information indicating each pixel depth of the (n-1)^{th} input frame, and n^{th} depth information indicating each pixel depth of the n^{th} input frame,
specifies, amongst the n^{th} intermediate frame pixels, an n^{th} appearance pixel as a fully or partially displayed pixel of the object which is not displayed in the (n-1)^{th} intermediate frame, based on the (n-1)^{th} depth information and the n^{th} depth information, and
acquires the (n-1)^{th} auxiliary information by converting a pixel value of the n^{th} appearance pixel in the (n-1)^{th} cumulative feature information to a prescribed value.

6. The image processing system according to Claim 1 or 2, wherein
the 1^{st} intermediate frame and a given auxiliary information are inputted to the cumulative feature information output layer, which outputs the 1^{st} cumulative feature information.

7. The image processing system according to Claim 1 or 2, wherein
the cumulative feature information is the image information having the same pixel number as the intermediate pixel number.

8. An image processing method, wherein
a processor:
acquires each of 1^{st} to N^{th} input frames (N is a natural number equal to or greater than 2) having a prescribed input pixel number;
acquires, based on each of the input frames, each of the 1^{st} to N^{th} intermediate frames by generating an intermediate frame which corresponds to the input frame and which has an intermediate pixel number equal to or greater than the input pixel number; and
inputs each of the intermediate frames to a machine learning model, and acquires each of 1^{st} to N^{th} estimation frames having an estimated pixel number equal to or greater than the intermediate pixel number which is greater than the input pixel number, wherein
the machine learning model includes:
a cumulative feature information output layer has the n^{th} intermediate frame (n= 2, 3, ..., N) and (n-1)^{th} auxiliary information based on (n-1)^{th} cumulative feature information indicating the features of the 1^{st} to (n-1)^{th} intermediate frames inputted thereto, and outputs the n^{th} cumulative feature information indicating the features of the 1^{st} to n^{th} intermediate frames; and
an estimation frame output layer has the n^{th} cumulative feature information inputted thereto and outputs the n^{th} estimation frame, wherein
the machine learning model has learnt by a plurality of training data which respectively includes
a learning intermediate frame having the intermediate pixel number generated based on a learning input frame having the input pixel number, and
a learning estimation frame having the estimated pixel number.

9. A program for functioning on a computer,
the program comprising:
an input frame acquisition means which acquires each of 1^{st} to N^{th} input frames (N is a natural number equal to or greater than 2) having a prescribed input pixel number;
an intermediate frame acquisition means which acquires, based on each of the input frames, each of the 1^{st} to N^{th} intermediate frames by generating an intermediate frame which corresponds to the input frame and which has an intermediate pixel number equal to or greater than the input pixel number; and
an estimation frame acquisition means which inputs each of the intermediate frames to a machine learning model, and acquires each of 1^{st} to N^{th} estimation frames having an estimated pixel number equal to or greater than the intermediate pixel number which is greater than the input pixel number, wherein
the machine learning model includes:
a cumulative feature information output layer has the n^{th} intermediate frame (n= 2, 3, ..., N) and the (n-1)^{th} auxiliary information based on (n-1)^{th} cumulative feature information indicating the features of the 1^{st} to the (n-1)^{th} intermediate frames inputted thereto, and outputs the n^{th} cumulative feature information indicating the features of the 1^{st} to n^{th} intermediate frames; and
an estimation frame output layer has the n^{th} cumulative feature information inputted thereto and outputs the n^{th} estimation frame, wherein
the machine learning model has learnt by a plurality of training data which respectively includes
a learning intermediate frame having the intermediate pixel number generated based on a learning input frame having the input pixel number, and
a learning estimation frame having the estimated pixel number.
